Europäisches Patentamt

European Patent Office

Office européen des brevets

(19)

(11) Veröffentlichungsnummer: **0 415 353 A2**

## (12) EUROPÄISCHE PATENTANMELDUNG

(21) Anmeldenummer: 90116489.7

(22) Anmeldetag: 28.08.90

(51) Int. Cl.⁵: **B23C 5/22, B23C 5/08**

(30) Priorität: 28.08.89 DE 8910280 U

(43) Veröffentlichungstag der Anmeldung:
06.03.91 Patentblatt 91/10

(84) Benannte Vertragsstaaten:
AT BE CH DE DK ES FR GB GR IT LI LU NL SE

(71) Anmelder: ENTWICKLUNGSZENTRUM FÜR
ZERSPANUNGSTECHNIK GMBH & CO. KG
Postfach 1345

W-7630 Lahr 17(DE)

(72) Erfinder: **Füner, Ernst,**
**Am Leimbach 15**
**W-7632 Friesenheim(DE)**

(74) Vertreter: **Patentanwälte Grünecker,**
**Kinkeldey, Stockmair & Partner**
**Maximilianstrasse 58**
**W-8000 München 22(DE)**

(54) Fräswerkzeug.

(57) Die vorliegende Erfindung betrifft ein Fräswerkzeug, bestehend aus mindestens einem Scheibenfräser, der seinerseits in mindestens einer Schneidenebene mindestens eine Schneide (37) aufweist, wobei das Fräswerkzeug sich dadurch auszeichnet, daß die Schneide (37) auf einem entfernbaren Schneidsegment (13) ausgebildet ist. Dadurch wird es möglich, verbrauchte Fräserschneiden besonders einfach auszutauschen.

FIG.1

EP 0 415 353 A2

## FRÄSWERKZEUG

Die vorliegende Erfindung betrifft ein Fräswerkzeug nach dem Oberbegriff des Anspruchs 1.

Zum Einbringen von schmalen Schlitzen in Werkstücke bzw. das Trennen von Werkstücken wird dies herkömmlicherweise mit Sägen in Form von Sägeblättern oder Scheibenfräsern vollzogen. Hierbei weisen die Scheibenfräser einen scheibenförmigen Fräserkopf auf, der eine Mehrzahl von Schneiden trägt. Der Fräserkopf ist mit einer Nabe verbunden, die wiederum so ausgebildet ist bzw. mit einem Dorn versehen sein kann, daß sie in die Werkzeugaufnahme der Werkzeugmaschine aufgenommen werden kann.

Der Fräserkopf ist dabei fest mit der Nabe verbunden bzw. einstückig mit dieser ausgebildet. Hierbei ist zunächst nachteilig, daß die Herstellung des Fräswerkzeugs aufwendig ist, und deshalb auch entsprechend teuer ist. Insbesondere bei einstückiger Ausbildung ergibt sich nachteilig, daß bei Abnützung der einzelnen Schneiden dies den gesamten Fräser unbrauchbar macht und ein entsprechendes Auswechseln bzw. Erneuern der Schneiden entsprechend langwierig ist, und nur zu geringen Standzeiten des Werkzeugs führt. Darüberhinaus ist das gleichzeitige Einbringen von mehreren Schlitzen nicht möglich.

Es ist deshalb Aufgabe der vorliegenden Erfindung ein Fräswerkzeug der eingangs genannten Art zu schaffen, bei dem die einzelnen Elemente einfach hergestellt werden können und eine entsprechende einfache Austauschmöglichkeit verbrauchter Fräserschneiden möglich ist.

Diese Aufgabe wird durch die kennzeichnenden Merkmale des Anspruchs 1 gelöst.

Dadurch, daß die Schneide auf einem entfernbaren Schneidsegment ausgebildet ist wird erreicht, daß die einzelnen Schneidsegmente einzeln und getrennt voneinander hergestellt werden können, und auch bei Verschleiß einzeln ausgewechselt werden können, was nicht nur die Herstellungskosten erheblich reduziert, sondern auch Ausfallzeiten des gesamten Werkzeugs erheblich vermindert, da ein entsprechendes einfaches und schnelles Auswechseln möglich wird.

Darüberhinaus ist dadurch auch die Möglichkeit gegeben, entsprechende Schneidstoffe auf der Basis eines polykristallinen Diamants oder kubischen Bornitrids oder dergleichen zu verwenden, da bei einem Versagen der Schneide des Schneidsegments entsprechend schnell ein Austausch vorgenommen werden kann. Darüberhinaus ergibt sich der Vorteil, daß durch Austauschen der Schneidsegemente sowohl der Durchmesser als auch die Schnittbreite verstellt werden können. Dies hat den Vorteil, daß die Anzahl der kompletten Werkzeuge einschließlich ihrer Aufnahmen erheblich reduziert werden kann, was wiederum zu erheblichen Kostenreduzierungen führt.

Die Unteransprüche haben vorteilhafte Weiterbildungen der Erfindung zum Inhalt.

Im Anspruch 1 ist die allgemeinste Form des erfindungsgemäßen Fräswerkzeugs dargelegt; bevorzugt weist das Fräswerkzeug jedoch mindestens zwei Schneidsegmente gleichmäßig im Umfang verteilt auf, so daß hierdurch die Schnittwirkung erhöht wird. Weiterhin können jedoch, um eine gleichmäßigere Schneidwirkung zu erzielen, 6 oder mehr Schneidsegmente gleichmäßig am Umfang des Fräsers verteilt angeordnet sein, wodurch die Schneidwirkung entsprechend erhöht wird.

Eine besonders einfache und wirkungsvolle Anordnung der Schneidsegmente ergibt sich dadurch, daß diese zwischen einer Nabe und einer Spannscheibe eingespannt sind, so daß durch Entfernen der Spannscheibe die Schneidsegmente wiederum entfernbar vorliegen.

Werden dabei die Schneidsegmente durch Befestigungsschrauben vorgespannt, wobei diese Löcher in den Schneidsegmenten durchsetzen, so wird wiederum eine wirksame und einfache Lagefixierung der Schneidsegmente erreicht.

In einer einfachen Ausführungsform wird die Vorspannung dabei durch einen Versatz der Bohrungen von Nabe und Spannscheibe bezüglich der Bohrung der Schneidsegmente erzeugt.

Eine besonders einfache und vorteilhafte Komplettierung der Lagesicherung wird dadurch erreicht, daß die Schneidsegmente einen Segmentgrund aufweisen, der gegen eine Nabenfläche anliegt, so daß die auf die Schneiden wirkenden Kräfte auf die Nabe übertragen werden können.

Weiterhin kann eine wirksame Umfangsarretierung dadurch erreicht werden, daß die Schneidsegmente an ihrer bezüglich der Drehrichtung des Fräsers vorderen Randseite eine Ausnehmung vorzugsweise in Form eines Halbkreises aufweisen, die von einem vorzugsweise zylinderförmigen Sicherheitsbolzen durchsetzt ist, der in Löchern der Nabe und/oder der Spannscheibe gelagert ist, so daß die hierbei entsprechend wirkenden Kräfte ebenfalls sicher aufgenommen werden können.

Eine Fliehkraftsicherung wird zusätzlich dadurch erreicht, daß die Schneidsegmente an ihrer bezüglich der Drehrichtung des Fräswerkzeugs hinteren Randseite eine Ausnehmung vorzugsweise in Form eines Halbkreises aufweisen, die von dem Bolzen durchsetzt wird, der bevorzugt die Ausnehmung nicht berührt. Dies hat auch den zusätzlichen Vorteil, daß die Schneidsegmente nicht mit höchster Präzision gefertigt werden müssen, da sie nur an einer Seite an den Sicherheitsbolzen anliegen.

In der obenbeschriebenen Ausführungsform des erfindungsgemäßen Fräswerkzeugs weist dieses eine Schneidenebene auf. Die erfindungsgemäße Lehre ist jedoch nicht darauf beschränkt, sondern es können mehrere Schneidenebenen vorgesehen werden, in denen sich jeweils mindestens eine Schneide befindet, so daß sich hierdurch besonders vorteilhaft das gleichzeitige Einbringen von mehreren Schlitzen erzielen läßt. Bei einer geringen Baulänge des Fräswerkzeugs, d.h. geringen Abstand der Ebenen, kann eine Distanzscheibe zwischen den Schneidebenen vorgesehen werden, und das gesamte Werkzeug ist auf einer Aufnahme aufgespannt. Werden noch mehr Schneidebenen vorgesehen und/oder weist das Fräswerkzeug eine erhebliche Länge auf, so können an den Enden des Fräswerkzeugs jeweils eine Aufnahme zum Einspannen in die Werkzeugmaschine vorgesehen werden.

In einer weiteren Ausführungsform der vorliegenden Erfindung kann das Fräswerkzeug so ausgebildet sein, daß der Scheibenfräser als Packung ausgebildet ist, die mit wenigstens einer weiteren Packung zu einem Gesamtwerkzeug verbindbar ist. Hierbei wird wiederum vorteilhafterweise die Flexibilität des jeweiligen gesamten Fräswerkzeugs erheblich erhöht und eine Vielfalt an Werkzeugaufbauten ermöglicht.

In einer besonders einfachen Ausführungsform sind zwischen den jeweiligen Packungen Distanzscheiben angeordnet, und die Packungen und die Distanzscheibe sind auf einen Dorn aufsteckbar und mittels einer Befestigungseinrichtung festlegbar.

Vorteilhafterweise weisen die Schneidsegmente Schneiden aus einem Schneidwerkstoff auf, der beispielsweise durch Löten oder Kleben aufgebracht wird. Dies erlaubt das Aufbringen modernster und sich ständig weiterentwickelnder Schneidwerkstoffe.

Weitere Einzelheiten, Merkmale und Vorteile der vorliegenden Erfindung ergeben sich aus der nachfolgenden Beschreibung unter Bezugnahme auf die Zeichnung. Darin zeigt:

**Fig. 1** eine perspektivische Explosionsdarstellung einer ersten Ausführungsform des erfindungsgemäßen Fräswerkzeugs;

**Fig. 2** in perspektivischer Explosionsdarstellung ein erfindungsgemäßes Fräswerkzeug mit zwei Schneidebenen; und

**Fig. 3** ein Fräswerkzeug gebildet aus zwei Packungen eines Scheibenfräsers.

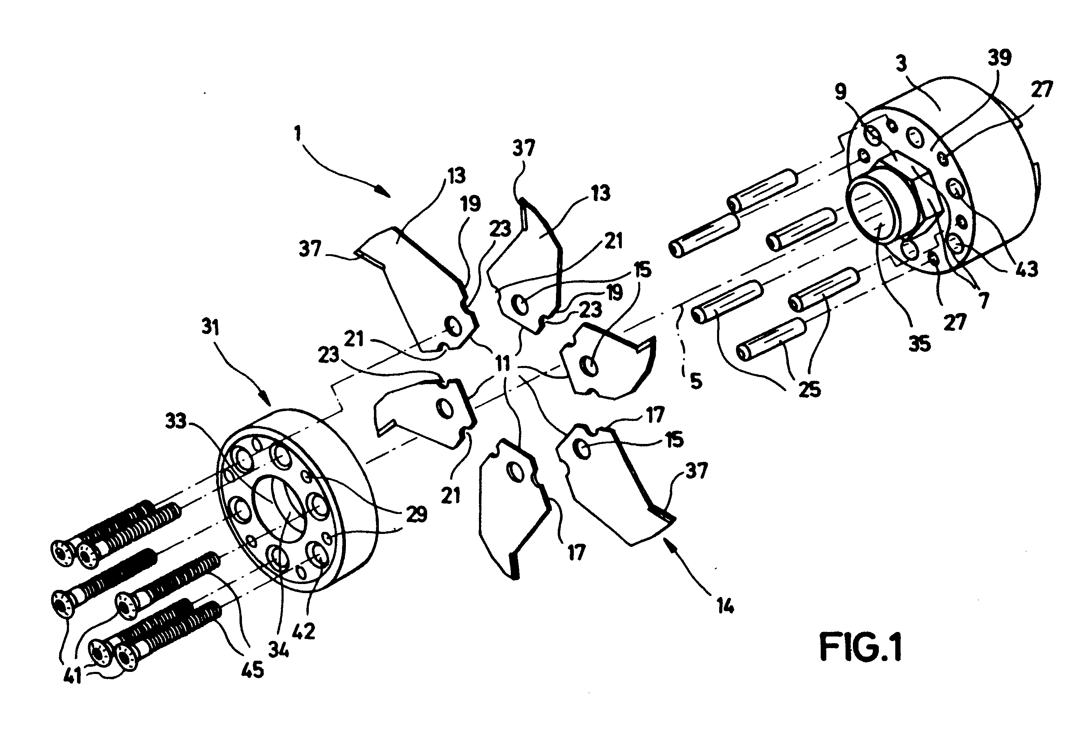

In Fig. 1 ist ein erfindungsgemäßes Fräswerkzeug 1 in einer bevorzugten Ausführungsform zur Verdeutlichung in explosionsartiger Darstellung gezeigt. Das Fräswerkzeug 1 weist eine Nabe 3 auf, die zylinderförmig ausgebildet ist. Die Nabe 3 weist eine in Längsrichtung der Zylinderachse 5 vorspringende Nabenflächeneinrichtung 7 auf, die Anlageflächen 9 aufweist. In vorliegendem Beispielsfalle sind sechs Anlageflächen 9 vorgesehen, zur Anlage an jeweils einen Segmentgrund 11 von Schneidsegmenten 13. In einer bevorzugten Ausführungsform gemäß der Darstellung sind sechs Schneidsegmente 13 vorgesehen. Die Schneidsegmente 13 sind somit in einer ersten Schneidenebene 14 angeordnet. Die Schneidsegmente 13 weisen jeweils im unteren Bereich eine Bohrung 15 auf und weisen weiterhin an der in Fräserschneidrichtung vorderen Randseite 17 und einer in Fräserumdrehungsrichtung hinteren Randseite 19 eine halbkreisförmige Ausnehmung 21 bzw. 23 auf.

Wie aus der Fig. 1 leicht ersichtlich, dienen die halbkreisförmigen Ausnehmungen 21 und 23 zur Aufnahme von zylinderförmigen Sicherheitsbolzen 25, die einerseits in Bohrungen 27 in der Nabe 3 lagegesichert sind. An ihrem anderen Ende werden sie andererseits in Bohrungen 29 einer Spannscheibe 31 lagegesichert.

Zur Zentrierung der Spannscheibe 31 weist diese eine kreisförmige Zentralöffnung 33 auf, die so ausgestaltet ist, daß sie auf einen kreisförmigen Vorsprung 35 der Nabe 3 paßt. Damit eine Anlage der Spannscheibe 31 an die Nabe 3 über die Nabenflächeneinrichtung 7 hinweg möglich ist, weist die Zentralöffnung 33 einen Abschnitt 34 größeren Durchmessers auf. Die Schneidsegmente 13 weisen bevorzugt die in der Fig. 1 dargestellte mehreckige Form auf. Sie können jedoch auch jegliche andere geeignete Formen aufweisen, die dazu dienen, Schneidwerkstoffe 37 aufzunehmen. Die Schneidwerkstoffe 37 können entweder aus herkömmlichen hochfesten Legierungen oder auch aus polykristallinen Diamanten oder kubischen Bornitriden und dergleichen ausgebildet sein, wie dies in der modernen Schneidetechnik möglich ist. Zur Lagesicherung der Schneidsegmente 13 werden diese an die Anlagefläche 9 der Nabe 3 einerseits und an deren vordere Anlageseite 39 angelegt, wobei die Sicherheitsbolzen 25 ein Verschwenken um die Längsachse 5 verhindern. Die Spannscheibe 31 wird aufgesetzt und Spannschrauben 41 werden durch entsprechende Bohrungen 42 in der Spannscheibe 31, durch die Bohrungen 15 der Schneidsegmente 13 hindurch in Bohrungen 43 der Nabe 3 eingesteckt. Die Spannschrauben 41 weisen außer ihrem Gewinde 45 Paßbereiche auf, die im Durchmesser etwas größer sind als der Durchmesser der Bohrungen 42 und 43, um in diese genau eingepaßt werden zu können.

Um eine Vorspannung der einzelnen Elemente des Fräswerkzeugs 1 untereinander zu erzeugen, wird diese durch einen Versatz der Bohrungen der Nabe 1 und der Spannscheibe 31 zu der Bohrung 15 der Schneidsegmente 13 erreicht.

In montierter Stellung verlaufen die vorderen Randseiten 17 der Schneidsegmente 13 parallel oder im wesentlichen parallel zu den hinteren Randseiten 19 der jeweils benachbarten Schneidsegmente 13, wobei zwischen ihnen ein geringfügiger Spalt verbleibt. Dies hat den Vorteil, daß die Schneidsegmente 13 nicht zu fertigungsgenau hergestellt werden müssen, was deren Herstellung wiederum verteuern würde.

Die Sicherheitsbolzen 25 sind im montierten Zustand in Berührung mit den halbkreisförmigen Ausnehmungen 21 in den vorderen Randseiten 17 der Schneidsegmente 13, wodurch sie hier eine einfache und wirkungsvolle Umfangsarretierung bieten.

Demgegenüber sind die halbkreisförmigen Ausnehmungen 23 bevorzugt außer Berührung mit den Sicherheitsbolzen 25 und dienen als zusätzliche Fliehkraftsicherung im Falle zu hoher Beanspruchungen etc..

Weiterhin wird eine stabile Auflage einerseits durch die Anlage der Segmentgrundseiten 11 an die Anlageflächen 9 und andererseits durch die jeweilige Anlage der Vorder-und Rückseiten der Schneidsegmente 13 an die vordere Anlagenseiten 39 der Nabe 3 bzw. die Anlagenseite der Spannscheibe 31 erreicht.

Insgesamt wird somit ein einfacher Aufbau eines Fräswerkzeugs erreicht, bei dem die einzelnen Schneidsegmente schnell und einfach ausgetauscht werden können, und wodurch insgesamt ein besonders kostengünstig herzustellender, zu wartender und entsprechend veränderbarer Scheibenfräser geschaffen wird.

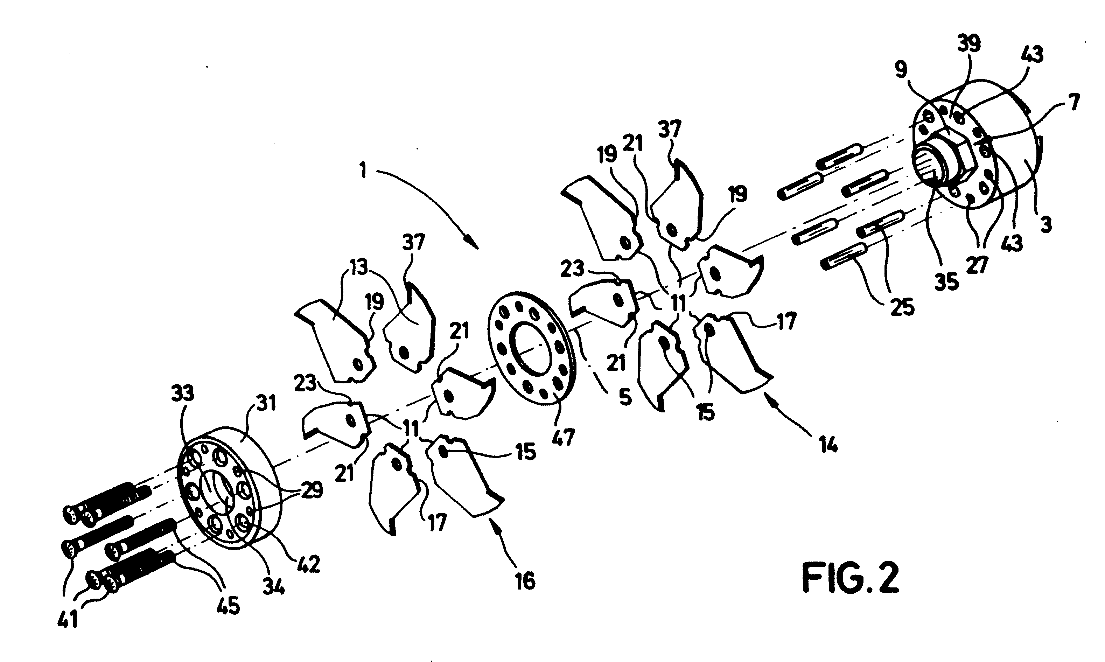

Aus Fig. 2 ist eine weitere Ausführungsform des erfindungsgemäßen Fräswerkzeugs 1 ersichtlich, wobei der Fig. 1 entsprechende Elemente mit den gleichen Bezugsziffern versehen sind. Wie aus Fig. 2 deutlich hervorgeht, weist das erfindungsgemäße Fräswerkzeug neben einer ersten Schneidenebene 14 eine zweite Schneidenebene 16 auf, die im Abstand zur Schneidenebene 14 angeordnet ist. Um diesen Abstand hervorzurufen, wird eine Distanzscheibe 47 zwischen die Schneidsegmente 13 der ersten Schneidenebene 14 und der zweiten Schneidenebene 16 angeordnet. Die Distanzscheibe 47 weist Bohrungen auf, für den Hindurchtritt sowohl der zylinderförmigen Sicherheitsbolzen 25 als auch der Spannschrauben 41.

Um eine sichere Aufnahme der Schneidsegmente 13 zu erlauben, ist die Dicke der Schneidsegmente 13 und der Distanzscheibe 47 insgesamt so bemessen, daß die Gesamtdicke nicht größer ist als die Breite der Anlageflächen 9, so daß die Spannscheibe entsprechend die Schneidsegmente 13 spannen kann.

Es ist jedoch auch möglich, noch eine größere Anzahl von Schneidenebenen mit den entsprechenden Schneidsegmenten vorzusehen, wobei hier die Nabenflächeneinrichtung entsprechend lang ausgebildet wird, so daß alle Schneidebenen eine entsprechende Aufnahme auf den Anlageflächen 9 erfahren.

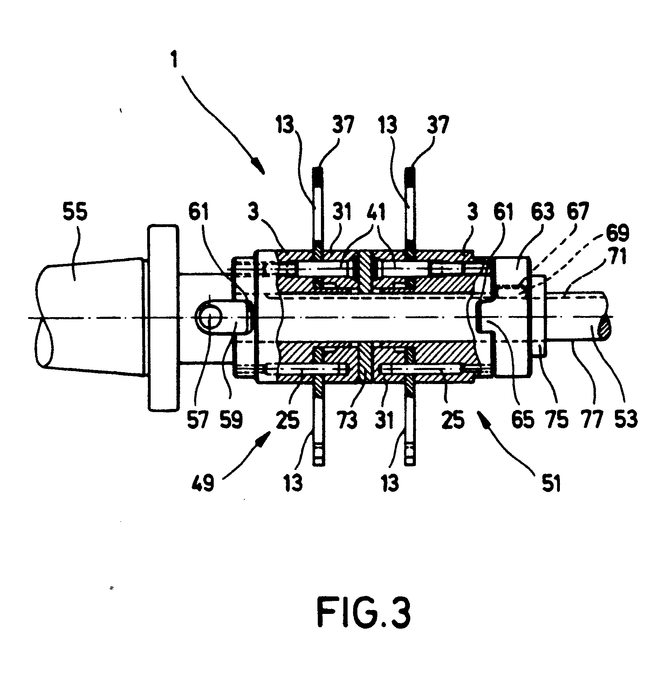

Aus Fig. 3 ist eine weitere Ausführungsform des erfindungsgemäßen Fräswerkzeugs ersichtlich. Wiederum sind hierbei gleiche Teile mit den gleichen Bezugsziffern versehen.

Das Fräswerkzeug 1 ist hierbei so ausgebildet, daß es eine linke und rechte Packung 49 und 51 aufweist, die auf einem Dorn 53 aufgesteckt sind. Der Dorn 53 ist an einer im Regelfall genormten Werkzeugaufnahme 55 befestigt oder einstückig mit dieser ausgebildet. Die Aufnahme der Nabe 3 der linken Packung 49 erfolgt in herkömmlicher Weise, beispielsweise durch eine durch einen Bolzen 57 befestigte Paßfeder 59, die in eine Nut 61 der Nabe 3 eingreift.

Zur axialen Festlegung der linken und rechten Packung 49 und 51 auf dem Dorn 53 ist ein Mitnehmerring 63 am gegenüberliegenden Ende der Aufnahme 55 vorgesehen. Dieser Ring weist einen ebenfalls in die Nut 61 der Nabe 3 eingreifenden Vorsprung 65 auf, wobei er am Innenumfang eine Kerbe 67 aufweist, zur Aufnahme einer Paßfeder 69. Um den Mitnehmerring 63 gegenüber dem Dorn 53 drehfest zu machen, weist dieser eine Nut 71 auf, in die die Paßfeder 69 eingesetzt ist. Hierdurch wird die rechte Packung 51 drehfest auf dem Dorn angeordnet. Zwischen der linken Packung und der rechten Packung kann weiterhin zur genauen Beabstandung der Schneidenebenen eine entsprechende Distanzscheibe 73 vorgesehen werden.

Um die linke und rechte Packung 49 und 51 auf dem Dorn 53 in axialer Richtung zu verspannen, kann beispielsweise eine Mutter 75 vorgesehen werden, die auf den Dorn 53 aufgeschraubt wird. Hierzu weist der Dorn 53 zumindest in diesem Bereich ein Außengewinde 77 auf.

Selbstverständlich sind jegliche geeignete Lagesicherungsmittel zum Aufspannen der Packungen 49 und 51 möglich.

Bei geringer Länge des Fräswerkzeugs 1 kann es ausreichen, daß nur eine Werkzeugaufnahme 55 vorgesehen ist. Werden noch mehr Packungen bzw. Schneidenebenen gemäß den Fig. 3 bzw. 2 vorgesehen, so kann es notwendig werden, daß eine weitere Aufnahme des Fräswerkzeugs 1 auf der der Werkzeugaufnahme 55 gegenüberliegenden Seite vorgesehen wird.

## Ansprüche

1. Fräswerkzeug bestehend aus mindestens einem Scheibenfräser, der seinerseits in mindestens einer Schneidenebene mindestens eine Schneide aufweist, **dadurch gekennzeichnet,**

daß die Schneide (37) auf einem entfernbaren Schneidsegment (13) ausgebildet ist.

2. Fräswerkzeug nach Anspruch 1, dadurch gekennzeichnet, daß wenigstens zwei Schneidsegmente (13) gleichmäßig am Umfang des Fräswerkzeugs (1) verteilt angeordnet sind.

3. Fräswerkzeug nach Anspruch 1 oder 2, dadurch gekennzeichnet, daß sechs Schneidsegmente (13) gleichmäßig am Umfang des Fräswerkzeugs (1) verteilt angeordnet sind.

4. Fräswerkzeug nach einem der Ansprüche 1 bis 3, dadurch gekennzeichnet, daß die Schneidsegmente (13) zwischen eine Nabe (3) und einer Spannscheibe (31) eingespannt sind.

5. Fräswerkzeug nach Anspruch 4, dadurch gekennzeichnet, daß die Schneidsegmente (13) durch Befestigungsschrauben bzw. Spannschrauben (41) vorgespannt werden, die Löcher (15) in den Schneidsegmenten (13) durchsetzen.

6. Fräswerkzeug nach Anspruch 5, dadurch gekennzeichnet, daß die Vorspannung durch einen Versatz von Bohrungen (43) in der Nabe (3) und Bohrungen (42) in der Spannscheibe (31) bezüglich der Bohrung (15) der Schneidsegmente (13) erzeugt wird.

7. Fräswerkzeug nach einem der Ansprüche 1 bis 6, dadurch gekennzeichnet, daß die Schneidsegmente (13) einen Segmentgrund (11) aufweisen, der gegen eine Nabenfläche bzw. Anlagefläche (9) der Nabe (3) anliegt.

8. Fräswerkzeug nach einem der Ansprüche 1 bis 7, dadurch gekennzeichnet, daß die Schneidsegmente (13) an ihrer bezüglich der Drehrichtung des Fräswerkzeugs (1) vorderen Randseite (17) eine Ausnehmung (21), vorzugsweise in Form eines Halbkreises, aufweisen, die von einem vorzugsweise zylinderförmigen Sicherheitsbolzen (25) durchsetzt ist, der in Bohrungen (27) der Nabe (3) und/oder Bohrungen (29) der Spannscheibe (31) gelagert ist.

9. Fräswerkzeug nach Anspruch 8, dadurch gekennzeichnet, daß die Ausnehmung (21) an dem Sicherheitsbolzen (25) anliegt.

10. Fräswerkzeug nach einem der Ansprüche 1 bis 9, dadurch gekennzeichnet, daß die Schneidsegmente (13) an ihrer bezüglich der Drehrichtung des Fräswerkzeugs (1) hinteren Randseite (19) eine Ausnehmung (23) vorzugsweise in Form eines Halbkreises, aufweisen, die von dem Sicherheitsbolzen (25) ersetzt wird, der bevorzugt die Ausnehmung (23) nicht berührt.

11. Fräswerkzeug nach einem der Ansprüche 1 bis 10, dadurch gekennzeichnet, daß es eine zweite Schneidenebene (16) aufweist, in der wenigstens ein Schneidsegment (13) angeordnet ist.

12. Fräswerkzeug nach Anspruch 11, dadurch gekennzeichnet, daß zwischen den ersten und zweiten Schneidenebenen (14, 16) eine Distanzscheibe (47) angeordnet ist.

13. Fräswerkzeug nach einem der Ansprüche 1 bis 12, dadurch gekennzeichnet, daß der Scheibenfräser als Packung (49) ausgebildet ist, die mit wenigstens einer weiteren Packung (51) zu einem Gesamtwerkzeug (1) verbindbar ist.

14. Fräswerkzeug nach Anspruch 13, dadurch gekennzeichnet, daß zwischen den Packungen (49, 51) eine Distanzscheibe (73) angeordnet ist, wobei die Packungen (49, 51) und die Distanzscheibe auf einen Dorn (53) aufsteckbar und mittels einer Befestigungseinrichtung (63, 67, 69, 71, 75, 77) festlegbar sind.

15. Fräswerkzeug nach einem der Ansprüche 1 bis 14, dadurch gekennzeichnet, daß die Schneidsegmente (13) mit Schneiden (37) aus einem Schneidwerkstoff versehen sind.

FIG.1

FIG.2

EP 0 415 353 A2

# FIG.3